# EUROPEAN PATENT SPECIFICATION

(11) **EP 2 926 540 B1**
(45) Date of publication and mention of the grant of the patent: **11.10.2017**
(21) Application number: 13858332.3
(22) Date of filing: 26.11.2013
(51) Int. Cl.: H04M 11/00

(54) **SYSTEM AND METHOD FOR DETERMINING AND VERIFYING GEO-LOCATION OF A RADIO DEVICE**
SYSTEM UND VERFAHREN ZUR BESTIMMUNG UND ÜBERPRÜFUNG DER GEOPOSITION EINER VORRICHTUNG
SYSTÈME ET PROCÉDÉ POUR DÉTERMINER ET VÉRIFIER L'EMPLACEMENT GÉOGRAPHIQUE D'UN DISPOSITIF RADIO

(30) Priority: 29.11.2012 US 201261731016 P; 29.11.2012 US 201261731032 P
(43) Date of publication of application: 07.10.2015
(60) Divisional application: 17188503.1
(73) Proprietor: QUALCOMM Incorporated, San Diego, CA 92121 (US)
(72) Inventor: LANCASTER, James C., Clermont, Florida 34715 (US); STANFORTH, Peter, Winter Springs, Florida 32708 (US); SCHMIDT, Jeffrey C., Orlando, Florida 32828 (US); CAMCHONG, Mario A., Oviedo, Florida 32765 (US)
(74) Representative: Valea AB
(86) International application number: PCT/US2013/072106
(87) International publication number: WO 2014/085509

(56) References cited:
- US-A1- 2004 198 392
- US-A1- 2004 198 392
- US-A1- 2004 266 457
- US-A1- 2004 266 457
- US-A1- 2012 272 261
- US-B1- 6 741 863

## Description

### TECHNICAL FIELD OF THE INVENTION

The present technology relates generally to fixed-location radio devices, and more particularly, to a system and method for determining and authenticating the geo-location of a fixed-location radio device. Additional aspects of the technology of the present disclosure relate generally to telecommunications and, more particularly, to a system and method for verifying the location of a radio device to improve control over spectrum used by the radio device.

### BACKGROUND

Some functions of a fixed-location radio device rely on precise geographic location information. The location information is sometimes obtained during an initial configuration routine. However, it may be undesirable to integrate a GPS receiver or other self-determining location capability into the radio device since the radio device is not expected to move very often during its operational lifespan. For instance, it is expected that the radio device will not move and, if it is moved to a new location, the initial configuration will be carried out again. Configuration is expected to be carried out with extreme infrequency, perhaps as seldom as once during the lifetime of the radio device. Therefore, including self-determining location capability in fixed-location radio devices is considered uneconomical due to its infrequency of use.

In addition, the process of measuring, recording and transferring location data, for example to a remote spectrum management server, may not be accurate, reliable or Therefore, including self-determining location capability in fixed-location radio devices is considered uneconomical due to its infrequency of use.

In addition, the process of measuring, recording and transferring location data, for example to a remote spectrum management server, may not be accurate, reliable or practical, even with reliance on GPS. Fixed-location radio devices are often deployed in places (e.g., indoors) with poor or inaccurate GPS triangulation. Furthermore, if different radio devices were to report location data in different manners, a remote spectrum management system would need to be configured to act on location information reported using multiple reference point datums (WGS, NAD, etc.) and formats (DMS, decimal degrees, etc.).

There are several reasons why location information for a fixed-location radio device is desirable. One reason is to provide the ability to acquire location specific information, such as spectrum or channel availability information for the location. An example of channel availability information that is location specific is a list of available television (TV) white space channels that is obtained from a TV white space registration management system.

Spectrum sharing is thought of as one of the most viable ways of improving the amount of spectrum available to wireless networks and other radio devices for conducting wireless communications. An exemplary spectrum sharing technique involves use of television white spaces under regulations set forth by an appropriate regulatory agency. An exemplary regulatory agency that regulates the use of wireless spectrum is the U.S. Federal Communications Commission (FCC). Other countries may have similar regulatory entities.

In the U.S., for example, the FCC has eliminated analog television (TV) broadcasts in favor of digital TV broadcasts. This has freed spectrum channels for use by unlicensed radio systems to offer various services, such as mobile communications and Internet access. In this context, the freed spectrum is commonly referred to as TV white space (or TVWS) but other types of white spaces are possible. In the case of TV white space, the white space is comprised of unused spectrum that is interleaved with spectrum used by incumbent radio devices in the channel 2 to channel 51 range (corresponding to 54 MHz to 698 MHz). Exemplary incumbent radio devices for TV white space include television broadcasters and other priority users of television channels. Under FCC regulations, for example, radio devices that use TVWS must register with a central database server (also referred to as a spectrum management server) and receive a channel list (also referred to as a channel map) of available channels for which the radio device may use in a shared environment with other TV band devices (TVBDs). The channel list that is generated for a radio device is generated by the central database server based on the location of the radio device. In this manner, the operation of incumbent radio devices having protected areas in which the radio device is located may be taken into account when determining channel availability.

Also, regulators and industry groups have proposed use of geo-location database technology to control or manage spectrum access for radios in other situations. For example, use of geo-location database technology has been proposed for the 3.550 GHz to 3.650 GHz bands and the 5 GHz UNII bands in the U.S. Outside the U.S., use of geo-location database technology has been proposed for TVWS bands in a number of countries.

A concern expressed by the operators of incumbent radio devices is how the incumbent spectrum use will be protected from the potential effects of interference by TVBDs. The solution of choice is a geo-location database (e.g., the above-noted central database server) that is capable of managing the allocation of spectrum in accordance with policies defined in terms of geography, time, frequency and other application parameters, such as transmit power and emissions characteristics. But this methodology is predicated on a radio device being able to accurately report its location and characteristics (such as antenna height, gain, and emissions characteristics). If a device inadvertently or maliciously reports inaccurate location data, the device may gain access to spectrum for which it would not otherwise have been permitted to use. This results in a high likelihood of interference. The following document represents relevant prior art:
US 2004/198392 relates to wireless access device in a wireless network, whether a known or unknown entity, can be located using a geolocation system according to the present invention. A signal strength is determined by a wireless intrusion detection system (WIDS) node in a wireless network for each wireless access device that it detects. The location of each WIDS node is determined. These locations may be "calibrated" from other known information, but never does the location of another device serve as a proxy for the location of one of the WIDS nodes. These determinations are not the use of the location of one device as a proxy for the location of another device.

### BRIEF DESCRIPTION OF THE DRAWINGS

FIG. 1 is a schematic view of an exemplary system for configuring a fixed-location radio device with precise geographic location information.
FIG. 2 is a flow diagram representing exemplary actions taken by a fixed-location radio device.
FIG. 3 is a schematic view of an exemplary fixed-location radio device.
FIG. 4 is a schematic view of an exemplary electronic device used to facilitate the configuring of the fixed-location radio device.
FIG. 5 is a schematic view of an exemplary server used to support functions of the fixed-location radio device.
FIG. 6 is a schematic view of an exemplary system in which reported location of an electronic device is verified.
FIG. 7 is a representative operational environment for the electronic device.
FIG. 8 is a flow diagram representing logical operations carried out by the electronic device and a server.
FIG. 9 is a chart showing representative data for a prophetic example of a predicted RF footprint generated by the server.
FIG. 10 is the chart of FIG. 4 with a prophetic exemplary graph of sensed spectrum data superimposed thereon.
FIG. 11 is a chart showing representative data for a prophetic example of a predicted RF footprint generated by the server along an upper X-axis and showing a prophetic exemplary graph representing sensed spectrum data along a corresponding lower X-axis to demonstrate correlation between the two data sets.

### DETAILED DESCRIPTION OF EMBODIMENTS

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments. Further, although method descriptions and flow charts may show specific orders of executing steps, the order of executing the steps may be changed relative to the order described. Also, two or more steps described in succession may be executed concurrently or with partial concurrence. One or more of the described or illustrated steps may be omitted.

### A. Configuration of a Fixed-Location Radio Device

The present disclosure describes systems and methods of configuring a fixed-location radio device with precise geographic location information. According to one aspect of the disclosure, a location determining method for a fixed-location radio device involves bringing a second, separate electronic device with location determining capabilities into close proximity of the fixed-location radio device. The fixed-location radio device enters a configuration mode and receives location data representing the geographical location of the second electronic device. The location data serves as a proxy for the actual location of the fixed-location radio device and the fixed-location radio device populates an internal configuration field with the location represented by the location data for future use. The fixed-location radio device exits the configuration mode and begins (or resumes) normal operation. Techniques for verifying that the location data was obtained in close proximity to the fixed-location radio device also are described. Also described are techniques for monitoring for possible movement of the fixed-location radio device following configuration of its location information.

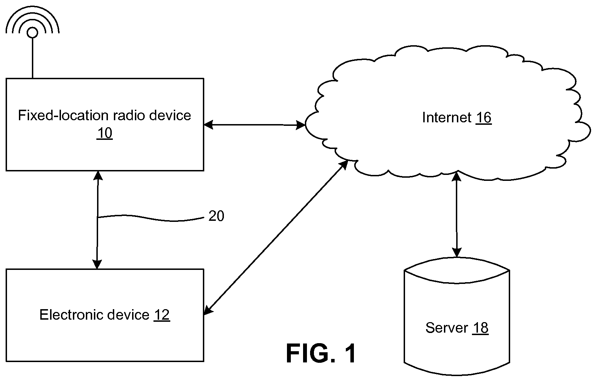

Referring initially to FIG. 1, shown is an exemplary system that includes a fixed-location radio device 10 and a separate electronic device 12. The fixed-location radio device 10 may be any device with radio-transmitting capability including, but not limited to, a WiFi access point, a fixed location TV white space radio (e.g., a television band radio device or TVBD), a base station, and so forth. While the fixed-location radio device 10 is a radio device that is not intended to be frequently moved, the device need not be permanently affixed to a location or structure. Typically, the electronic device 12 is a portable electronic device and has communication capabilities that are compatible with communication capabilities of the fixed-location radio device 10, as will be described in greater detail.

The electronic device 12 may be any suitable electronic device with location-determining capability, examples of which include a mobile telephone, a tablet, laptop or other computer, etc. The location-determining capability of the electronic device 12 may be implemented with or supported by an advanced location service, for example, GPS, assisted-GPS (A-GPS or aGPS), cellular base station triangulation, and/or location assessment based on wireless LAN detection that works in combination with a database service (e.g., a database of WiFi access point location information such as the database services offered under the designation "Skyhook" by Skyhook Wireless, Inc. of 34 Farnsworth Street, 5th Floor, Boston, MA 02210), or any other location determination technique.

In the exemplary system of FIG. 1, the fixed-location radio device 10 and the electronic device 12 are within close physical proximity of each other. In one embodiment, the term close proximity means 50 meters or less, which is consistent with the current location granularity specified by the Federal Communication Commission (FCC) in the U.S. for valid whitespace channel lists.

In some embodiments, at least some communications between the fixed-location radio device 10 and the electronic device 12 are direct. Direct communication may be wired or wireless using any suitable protocol for data transfer. In other embodiments, at least some communications between the fixed-location radio device 10 and the electronic device 12 are indirect. Indirect communications include communications through a separate network apparatus and may include communications through the Internet 16 and/or by way of a remote server 18. The remote server 18 need not be a single device in a single place. Any functions described herein that are performed by the server 18 may be performed by any combination of one or more servers in one or more different locations.

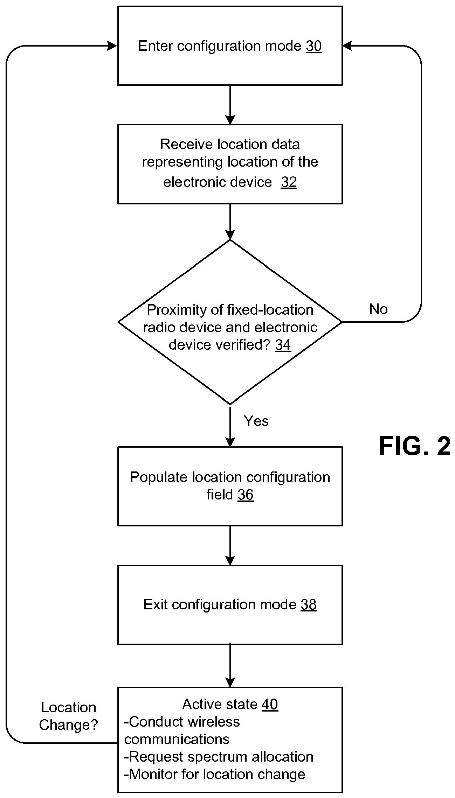

With additional reference to FIG. 2, illustrated is a flow chart diagram that depicts an exemplary method for configuring the fixed-location radio device 10 with precise geographic location information. FIG. 2 depicts steps carried out by the fixed-location radio device 10. Complimentary steps carried out by the electronic device 12 and the server 18 will be apparent from the following description.

The method may begin at step 30, in which the fixed-location radio device 10 enters a configuration mode. The configuration mode may be a default mode for the fixed-location radio device 10 that is entered into when the device is powered on for the first time. The configuration mode may be triggered at other times, such as if the fixed-location radio device 10 changes location, if a user manually triggers the configuration mode, or after a predetermined amount of time elapses since a previous configuration. The fixed-location radio device 10 may also return to step 30 should there be a failure to verify or authenticate location data. The configuration mode may place the fixed-location radio device 10 in a state where it is unable to perform some communication functions, such as operating as an access point or a radio device.

The configuration mode includes storing a location value for the fixed-location radio device 10 in memory of the fixed-location radio device 10 or in memory of the server 18. Other configuration operations may be performed during the configuration mode.

As part of the configuration process, a user overseeing the configuration process may obtain location data with the electronic device 12. The location data represents the location of the electronic device 12 at the time that the electronic device 12 made a location determination. In one embodiment, the location data is time-stamped with a time at which the location determination was made. The location data will be used to further represent the location of the fixed-location radio device 10. Therefore, it is desirable that the electronic device 12 makes the location determination in close proximity to the fixed-location radio device 10. In some instances, precision of the location determination may be improved if the electronic device 12 makes the location determination some distance from the fixed-location radio device 10 rather than if positioned very close to the fixed-location radio device 10 (e.g., within 5 meters) during location determination. For instance, if the fixed-location radio device 10 is indoors, it may be desirable for the user to carry the electronic device 12 outdoors, make a location determination, and then use the determined location as the location of the fixed-location radio device 10. But this means that accuracy of the fixed-location radio device 10 could be compromised due to unintended or malicious misuse of the location determination capability of the electronic device 12 to generate the location of the fixed-location radio device 10. The techniques described below reduce the chance that the location, as determined by the electronic device 12, is inaccurate for the fixed-location radio device 10 to the extent that a whitespace channel map that is generated for the fixed-location radio device 10 using the location as determined by the electronic device 12 would be invalid for the actual location of the fixed-location radio device 10.

At step 32, the fixed-location radio device 10 receives location data representing the location of the electronic device 12 having location determining capabilities. As indicated, the location data serves as a proxy for the actual location of the fixed-location radio device 10. The location data may be location coordinates associated with a precision metric, such as precision quantified by a calculated DOP (diameter of precision) of the location measurement.

In one embodiment, at step 34, the fixed-location radio device 10 (or the server 18) verifies that the location data accurately represents the actual location of the fixed-location radio device 10 to the extent that a whitespace channel map that is generated for the fixed-location radio device 10 using the location as determined by the electronic device 12 would be valid for the actual location of the fixed-location radio device 10. The location of the fixed-location radio device 10 may be used for operations of the fixed-location radio device 10, such as requesting and obtaining a spectrum allocation or channel map of available channels that may be used by the fixed-location radio device 10 for wireless communications. In an exemplary embodiment, the fixed-location radio device 10 may be a TVBD that registers with the server 18 for a TV whitespace channel map that is based on the location of the fixed-location radio device 10. If the reported location of the fixed-location radio device 10 does not accurately represent the actual location of the fixed-location radio device 10, then spectrum allocations or channel maps provided by the server 18 may contain channels (or an identification of spectrum) that are protected for the exclusive use of other radio systems, often referred to as incumbent systems. Therefore, some exemplary techniques for verifying the relative accuracy and/or authenticity of the location data involves verifying that the electronic device 12 is within close proximity to the fixed-location radio device 10 at the time that the location measurement is made.

Various verification techniques will be discussed. One or more verification techniques may be employed. Therefore, aspects of some of the verification techniques need not be employed in every instance. For example, one technique involves use of a wired or wireless short-range communication link 20. But location data or other data may be transferred through a network to the fixed-location radio device 10 and/or the server instead of through the wired or wireless short-range communication link 20 when one or more of the other verification techniques are employed. If the verification succeeds, the fixed-location radio device 10 may proceed to another configuration mode step (e.g., step 36). If the verification of step 34 should fail, the fixed-location radio device 10 may return to step 30 to await new location data.

One approach to verifying accuracy is to verify that the receiving of the location data by the fixed-location radio device 10 is carried out when the electronic device 12 is within close proximity to the fixed-location radio device 10. One exemplary technique for communicating the location data when the devices 10, 12 are in close proximity is to use a wired or wireless short-range communication link 20. The fixed-location radio device 10 may verify the use of the short-range communication link 20 before proceeding to another step. A wired short-range communication link 20 may include a temporary, physical tether between the devices 10, 12 with a communications cable, typically without any intervening active devices between the devices 10, 12. Exemplary cable types and coordinating communications interfaces/standards for this purpose include, but are not limited to USB, Ethernet, Firewire, etc. A wireless short-range communication link 20 is an operative radio-based communication link directly between the devices 10, 12 that uses radio equipment with limited transmission range and/or has a distance that may be confirmed, such as with signal strength detection. Exemplary wireless communications standards or protocols for this purpose include Bluetooth, WiFi with RSSI measurement, RFID, NFC, and optical (e.g., infrared) links.

As an alternative verification technique, or a verification technique that is used in combination with one or more of the other verification techniques described herein, the fixed-location radio device 10 (or the server 18) verifies that the electronic device 12 made the location determination within a predetermined amount of time before transmitting the location data to the fixed-location radio device 10 (or the server 18). The predetermined amount of time may be, for example, five minutes, two minutes, one minute, or some other amount of time. The predetermined amount of time may be selected to be relatively short, but still leave the user adequate time to move from the position at which the location determination was made to the position at which the transmission is made. The predetermined amount of time may be verified by checking the time stamp of the location data against a time at which the fixed-location radio device 10 (or the server 18) receives the location data.

To trigger the electronic device 12 to make a location determination to generate the location data that is received by the fixed-location radio device 10 in step 32, the user may prompt the electronic device 12 to make the location determination. As indicated, this may be performed at a distance from the fixed-location radio device 10. The electronic device 12 may alternatively transmit location data stored in a memory from a prior location determination.

Other triggers to make the location determination may be used as an alternative verification technique, or a verification technique that is used in combination with one or more of the other verification techniques described herein. An exemplary trigger is a location request message set from the fixed-location radio device 10 (or the server 18) to the electronic device 12 that places the electronic device 12 in a location determining mode. The trigger message may be transmitted over a wired or wireless short-range communication link 20 as described above to ensure that the electronic device 12 is in close physical proximity with the fixed-location radio device 10 when the trigger message is received by the electronic device 12. Once received the trigger message is received, the user may have a predetermined amount of time to complete certain tasks. These tasks may include one or more of disconnecting the wired or wireless short-range communication link 20, bringing the electronic device 12 to an appropriate spot for location determination, inputting a command to the electronic device 12 that prompts the electronic device 12 to make the location determination, returning to the area of the fixed-location radio device 10 and reestablish the wired or wireless short-range communication link 20, and transmitting the location data. The predetermined amount of time may be five minutes, two minutes, one minute, or some other amount of time. In one embodiment, only location data that is generated while the electronic device 12 is in the triggered location determining mode will be accepted by the fixed-location radio device 10 (or the server 18). The time stamp of the location data may be used for this purpose and/or the triggered location determining mode may be locked to user actions other than those used to support the configuration mode of the fixed-location radio device 10.

An alternative verification technique, or a verification technique that is used in combination with one or more of the other verification techniques described herein, is to independently assess the location data. In one embodiment, the location data is reported to the server 18. Also reported to the server 18 is spectrum sensing information that is generated by the fixed-location radio device 10. The spectrum sensing information includes field strength measurements for each of a predetermined number of channels. The channels are selected so that at least some of the channels should contain detectable radio emissions from transmitters with known locations and broadcast characteristics. Exemplary channels for this purpose are UHF and/or VHF TV bands on which TV station transmitters operate. Using the known locations and broadcast characteristics of transmitters having coverage areas that contain the location represented by the location data, the server 18 generates a predicted spectrum profile (or "spectrum fingerprint") of signal strengths that the fixed-location radio device 10 ought to detect at the location represented by the location data. The predicted spectrum profile for the location may be determined by applying a path loss model to the broadcast characteristic information for each of the known transmitters. If the sensed signal strength data correlates with the predicted spectrum profile, then it may be concluded that the fixed-location radio device 10 is in the location represented by the location data. But if the sensed signal strength data does not correlate with the predicted spectrum profile, it may be concluded that the fixed-location radio device 10 is not in the location represented by the location data. Additional description of verifying a location using sensed radio signals is set forth in following sections of this document.

An alternative verification technique, or a verification technique that is used in combination with one or more of the other verification techniques described herein, is to use unique information corresponding to the fixed-location radio device 10. This technique may be employed in cases where the electronic device 12 and the fixed-location radio device 10 do not communicate directly with one another, but communicate via the Internet 16 or each separately communicate with the server 18.

The unique information corresponding to the fixed-location radio device 10 may be a unique key that is configured and used by the relevant devices to ensure that the electronic device 12 and the fixed-location radio device 10 are in close proximity when the location data is generated by the electronic device 12. The key may be electronic data (e.g., an alphanumeric code) and, in one embodiment, uniquely identifies the fixed-location radio device 10 or may be used to distinguish the fixed-location radio device 10 from other devices. Exemplary keys include, but are not limited to, a product identifier (product ID) for the fixed-location radio device, which may be an FCCID in at least the U.S.), a key generated with a random number generator or a routine used to generate computer security keys, or some other value. The key may be stored in memory in the fixed-location radio device 10 or in the server 18, the key may be generated on as as-needed basis by the fixed-location radio device 10 or by the server 18, or may result from actions taken by one or more of the devices, such as by scanning a bar code with the electronic device 12.

In the described embodiments, the electronic device 12 obtains the key by an appropriate method, such as by scanning a bar code or by communications with the fixed-location radio device 10 or the server 18. The process of the electronic device 12 obtaining the key and then the electronic device 12 communicating the key to the fixed-location radio device 10 or the server 18 is used to verify the close proximity between the electronic device 10 and the fixed-location radio device 12. To this end, several types of keys, several ways for the electronic device 12 to obtain the key, and several ways for the electronic device 12 to communicate the key are described.

In one embodiment, the key is obtained by the electronic device 12 in a manner that maximizes the likelihood that the electronic device 12 is in close proximity with the fixed-location radio device 10. For instance, the key may be communicated from the fixed-location radio device 10 to the electronic device 12 over the wired or wireless short-range communication link 20, which is a communication medium known to have a limited range. In addition, or alternatively, the electronic device 12 may communicate the key (with or without the location data) back to the fixed-location radio device 10 for verification over the wired or wireless short-range communication link 20. One or both of these communications techniques may be employed in cases where the key is generated, stored and/or validated (upon return of the key from the electronic device 12) by the fixed-location radio device 10 or in cases where the key is generated, stored and/or validated (upon return of the key from the electronic device 12) by the server 18. In the case where the key is generated, stored and/or validated by the server 18 and one or more communications to or from the electronic device 12 and involving the key are via the fixed-location radio device 10 and the wired or wireless short-range communication link 20, additional communications will occur between the fixed-location radio device 10 and the server 18 via another communications medium (e.g., the Internet 16). In the case where the key is generated, stored and/or validated by the server 18 and one or more communications to or from the electronic device 12 and involving the key are not via the fixed-location radio device 10 and the wired or wireless short-range communication link 20, additional communications will occur between the electronic device 12 and the server 18 via another communications medium (e.g., the Internet 16).

In another embodiment, the key is obtained by the electronic device 12 by optically scanning key data from which the key is derived. Optically scanning, as used herein, refers to bar code reading techniques, which include photographing and electronically processing key data. The key data preferably is affixed on the fixed-location radio device 10 by printing, attaching a label, etc. Alternatively, the key data is affixed to packaging for the fixed-location radio device 10 or documentation for the fixed-location radio device 10. Exemplary key data that may be scanned is a bar code that is affixed to one of these items. The bar code may be a series of lines (e.g., similar to a universal product code (UPC) bar code format) or a two dimensional, matrix type bar code (e.g., similar to a quick response (QR) bar code format).

In another embodiment, the key is displayed on a display of fixed-location radio device 10 and optically read by the electronic device 12 or manually keyed into the electronic device 12 by the user. In another embodiment, such as when the key is transmitted from the server 18 to the electronic device 12, the key is displayed on a display of electronic device 12 and optically read by the fixed-location radio device 10 or manually keyed into the fixed-location radio device 10 by the user.

The key may be a permanent key for the fixed-location radio device 10 and does not change over time. Alternatively, the key is uniquely generated for the iteration of the configuration mode and has is valid for a limited period of time (e.g., five minutes, two minutes, one minute or some other period of time). In the case of a key with an expiration, the user may have the duration during which the key is valid to complete certain tasks. These tasks may include one or more of receiving the key, disconnecting the wired or wireless short-range communication link 20, bringing the electronic device 12 to an appropriate spot for location determination, inputting a command to the electronic device 12 that prompts the electronic device 12 to make the location determination, returning to the area of the fixed-location radio device 10 and reestablish the wired or wireless short-range communication link 20, and transmitting the key and location data.

In other cases, the key may be communicated to the electronic device 12 concurrently with or after the electronic device 12 transmits the location data. In this case, to complete validation, the electronic device 12 may transmit the key to an appropriate destination (e.g., the fixed-location radio device 10 or the server 18) over an appropriate communications medium (e.g., the wired or wireless short-range communication link 20 or the Internet 16). This task may need to be completed within a predetermined amount of time following the communication of the location data from the electronic device 12 to the fixed-location radio device 10 or the server 18.

Upon return of the key and location data to the fixed-location radio device 10 (or the server 18), the fixed-location radio device 10 (or the server 18) verifies the value of the key and, if appropriate, validates that other key-related actions were carried out appropriately (e.g., one or more communications were made over an appropriate medium or a certain action was performed manually at the fixed location radio device 10) and/or that the key has not expired. If the key is determined by the fixed-location radio device 10 (or the server 18) to be valid, then the location data is accepted. For validation purposes, the key may be communicated between the fixed-location radio device 10 and the server 18 in addition to being communicated between one of the fixed-location radio device 10 or the server 18 and the electronic device 12.

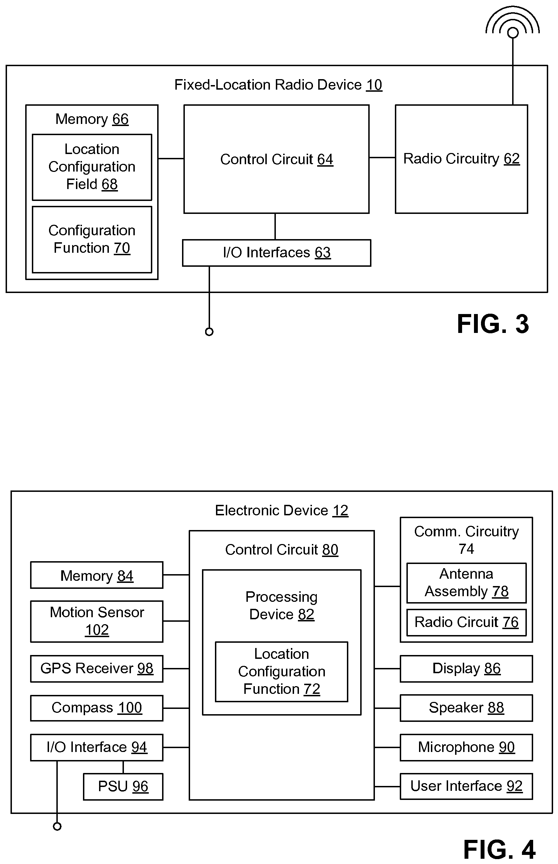

Following successful validation of the location data, the logical flow may proceed to step 36. In step 36, a location configuration field of the fixed-location radio device 10 is populated with a location value corresponding to the location represented by the location data generated from the electronic device 12. In one embodiment, the fixed-location radio device 10 stores the location value in a non-transitory computer readable medium, such as a memory 66 (FIG. 3). The location value may be in the same data format as the location data or the location value may be in a different data format. Regardless of the data format of the location value, the location value and the location data represent the same location. In another embodiment, the location value is adjusted relative to the location data. For instance, the location value may be adjusted for distance and possibly compass direction between the fixed-location radio device 10 and the electronic device 12 at the time that the location is determined by the electronic device 12. The distance between the fixed-location radio device 10 and the electronic device 12 may be measured with a tape measure, a laser, or another device. Another way to determine the distance is to start or end with the devices 10, 12 touching or within several meters of each other, and track movement of the electronic device 12 between this position and a position at which the location is determined. Motion tracking may be made with an accelerometer, for example.

At step 38, the fixed-location radio device 10 exits the configuration mode. Once configuration of the fixed-location radio device 10 is complete, the fixed-location radio device 10 may enter an active state at step 40 where the fixed-location radio device 10 conducts wireless communications. Entering the active state may require successful completion of obtaining a validated location in accordance with the above-described steps or other techniques.

While in an active state, the fixed-location radio device 10 may conduct intended wireless communication functions. In one embodiment, the wireless communications include transmitting a request to the server 18 for a spectrum allocation and/or a channel map containing an identification of spectrum or channels that may be used by the fixed-location radio device 10 for wireless communications. The request may contain the location value, if not already known to the server 18. The spectrum or channels in the spectrum allocation or channel map provided by the server 18 to the fixed-location radio device 10 may be generated for the location value. Following the exemplary embodiment of a whitespace channel allocation, the server 18 may evaluate the coverage areas of protected radio devices. If a coverage area includes the location represented by the location value, then the primary operating channel of the protected radio device will not be available for use by the fixed-location radio device 10. Channels that are not used by an incumbent radio device at the location represented by the location value may be considered available for use by the fixed-location radio device 10 and those channels may be communicated to the fixed-location radio device 10 in a channel list.

In the active state, the fixed-location radio device 10 and/or the server 18 may monitor the fixed-location radio device 10 to determine if the fixed-location radio device 10 has moved in a manner indicating potential for the fixed-location radio device 10 to have changed geographical location. A change in geographical location may be movement that causes the location value to be inaccurate for the fixed-location radio device 10 to the extent that a whitespace channel map that is generated for the fixed-location radio device 10 using the location value would be invalid for the actual location of the fixed-location radio device 10. If it is determined that the fixed-location radio device 10 has potentially changed geographical location, an authorization to continue wireless communications may be revoked until the location of the fixed-location radio device is revalidated or re-established. In one embodiment the fixed-location radio device 10 may reenter the configuration mode at step 30 to repeat the above-described steps.

There are a number of methods for determining if the fixed-location radio device 10 has potentially changed location. One exemplary technique involves monitoring the output of a motion sensor (e.g., an accelerometer) that is embedded within the fixed-location radio device 10.

Another exemplary technique of monitoring potential location changes of the fixed-location radio device 10 involves monitoring the IP address and routing information for data packets that are exchanged between the fixed-location radio device 10 and the server 18. If the fixed-location radio device 10 does not change in location, this information should remain relatively consistent over time. Exemplary communications between the fixed-location radio device 10 and the spectrum profile from which this information may be monitored includes, but is not limited to, available channel requests from the fixed-location radio device 10, channel allocations sent to the fixed-location radio device 10, spectrum use reports, radio device monitoring, etc.

Another exemplary technique of monitoring potential location changes of the fixed-location radio device 10 involves periodically collecting spectrum scanning results from the fixed-location radio device 10. The technique also includes comparing the spectrum scanning results against a predicted spectrum profile (or "spectrum fingerprint") of the signal strengths that the fixed-location radio device 10 ought to detect at the location represented by the location value. The predicted spectrum profile may be generated in the manner described above. If there is a high correlation between these data sets, then the fixed-location radio device 10 may be considered to be in the location represented by the location value. But if there is a low correlation between these data sets, then a determination may be made that the fixed-location radio device 10 moved from the location represented by the location value. Additional description of verifying a location using sensed radio signals is set forth in following sections of this document.

With additional reference to FIG. 3, illustrated is a schematic block diagram of an exemplary hardware configuration of the exemplary fixed-location radio device 10. The fixed-location radio device 10 includes radio circuitry 62 for conducting wireless communications. Since the fixed-location radio device 10 may carry out wireless communications over multiple protocols and at different frequencies, the illustrated radio circuitry 62 may represent more than radio transceiver. The fixed-location radio device 10 also may have one or more physical input/output (I/O) interfaces 63 that are used to establish wired communication connections (e.g., a wired short-range communication link with the electronic device 12). In one embodiment, the fixed-location radio device 10 may include an optical interface (e.g., an infrared receiver and/or transmitter). Other components may be present, such as a motion sensor assembly (e.g., one or more accelerometers), a display, a user interface (e.g., a touch input associated with a display and/or a key pad), etc.

Overall functionality of the fixed-location radio device 60 may be controlled by a control circuit 64. The control circuit 64 may execute code stored in a memory (not shown) within the control circuit 64 and/or in a separate memory (e.g., memory 66) in order to carry out the above-described method for configuring a fixed-location radio device 10. In one embodiment, the functionality is embodied as executable code (e.g., a configuration function 70) that is stored by the memory 66 and executed by the control circuit 64. The memory 66 is a non-transitory computer readable medium and may be embodied as one or more of an electronic memory (e.g., a buffer or a flash memory), a magnetic memory (e.g., a hard drive), or an optical memory (an optical disk). In a typical arrangement, the memory 66 may include a non-volatile memory for long-term data storage and a volatile memory that functions as system memory (e.g., RAM) for the control circuit 64. The memory 66 may exchange data with the control circuit 64 over a data bus. Accompanying control lines and an address bus between the memory 66 and the control circuit 64 also may be present. Further, the memory 66 includes the location configuration field 68 for storing the location value representing the location of the fixed-location radio device 10.

With additional reference to FIG. 4, shown is schematic illustration of the electronic device 12 when configured as a mobile telephone (e.g., a smartphone). The electronic device 12 may include a location configuration function 72 that embodies the functions described above for providing location data to the fixed-location radio device 10.

The electronic device 12 includes communications circuitry 74. In the illustrated exemplary embodiment, as part of the communications circuitry 74, the electronic device 12 includes a radio circuit 76 and an antenna assembly 78. The communications circuitry 74 may be used to carry out various wireless communications functions, including communicating with the server 18 and/or the fixed-location radio device 10. In the exemplary case where the electronic device 12 is a mobile telephone, communications functions also may include engaging in voice or video calls, and sending or receiving messages (e.g., email messages, text messages, multimedia messages, instant messages, etc.), accessing the Internet, etc.

The illustrated components of the communications circuitry 74 may represent one or more than one radio transceiver to enable the electronic device 12 to be able to communicate over various types of network connections and/or protocols. For instance, the electronic device 12 may be configured to communication with a cellular communications network. Additionally, or as an alternative to cellular communications capability, the electronic device 12 also may be configured to communicate with other types of networks, such as a packet-switched network (e.g., WiFi or WiMAX).

Overall functionality of the electronic device 12 may be controlled by a control circuit 80 that includes a processing device 82. The processing device 82 may execute code stored in a memory within the control circuit 80 and/or in a separate (e.g., memory 84) in order to carry out the operations of the electronic device 12. For instance, the processing device 82 may be used to execute the location configuration function 72. The memory 84 is a non-transitory computer readable medium and may be, for example, one or more of a buffer, a flash memory, a hard drive, a removable media, a volatile memory, a non-volatile memory, a random access memory (RAM), or other suitable device. In a typical arrangement, the memory 84 includes a non-volatile memory for long term data storage and a volatile memory that functions as system memory for the control circuit 80. The memory 84 may exchange data with the control circuit 80 over a data bus. Accompanying control lines and an address bus between the memory 84 and the control circuit 80 also may be present.

The electronic device 12 may include a display 86 for displaying visual information to a user. Also, the electronic device 12 may include a speaker 88 and a microphone 90 to allow the user to carry out voice conversations. One or more user interfaces 92, such as a keypad and/or a touch-sensitive input associated with the display 86, may be present to provide for a variety of user input operations.

The electronic device 12 may further include one or more input/output (I/O) interface(s) 94. The I/O interface(s) 94 may include one or more electrical connectors for connecting the electronic device 12 to another device (e.g., a computer or the fixed-location radio device 10) or an accessory (e.g., a personal handsfree (PHF) device) via a cable, and/or for connecting the electronic device 12 to a power supply. Therefore, operating power may be received over the I/O interface(s) 94 and power to charge a battery of a power supply unit (PSU) 96 of the electronic device 12 may be received over the I/O interface(s) 94. The PSU 96 may supply power to operate the electronic device 12 in the absence of an external power source.

A position data receiver, such as a global positioning system (GPS) receiver 98, may be involved in determining the location of the electronic device 12. A compass 100 may be used to determine the orientation of the electronic device 12. One or more motion sensors 102, such as accelerometers, may be used to sense movement of the electronic device 12.

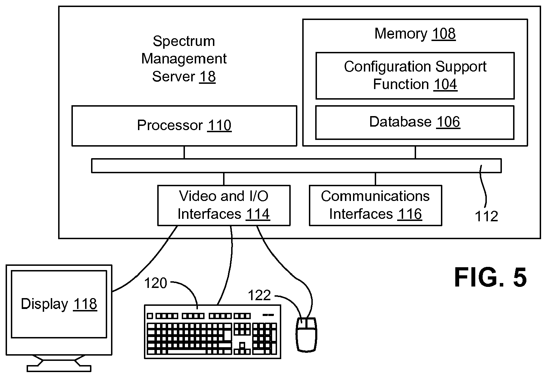

With additional reference to FIG. 5, the server 18 may be implemented as a computer-based system that is capable of executing computer applications (e.g., software programs), including a configuration support function 104. The configuration function 70 of the fixed-location radio device 10, the location configuration function 72 of the electronic device 12, and the configuration support function 104 of the server 18 may cooperate with each other to determine and verify the location of the fixed-location radio device 10. The location verification function 18 and a database 106 may be stored on a non-transitory computer readable medium, such as a memory 108. The database 106 may be used to store various information sets used to carry out the functions described in this disclosure. The memory 108 may be a magnetic, optical or electronic storage device (e.g., hard disk, optical disk, flash memory, etc.), and may comprise several devices, including volatile and non-volatile memory components. Accordingly, the memory 108 may include, for example, random access memory (RAM) for acting as system memory, read-only memory (ROM), hard disks, optical disks (e.g., CDs and DVDs), tapes, flash devices and/or other memory components, plus associated drives, players and/or readers for the memory devices.

To execute logical operations, the server 18 may include one or more processors 110 used to execute instructions that carry out logic routines. The processor 110 and the memory 108 may be coupled using a local interface 112. The local interface 112 may be, for example, a data bus with accompanying control bus, a network, or other subsystem.

The server 18 may have various input/output (I/O) interfaces 114 as well as one or more communications interfaces 116. The interfaces 114 may be used to operatively couple the server 18 to various peripherals, such as a display 118, a keyboard 120, a mouse 122, etc. The communications interface 116 may include, for example, a modem and/or a network interface card. The communications interface 116 may enable the server 18 to send and receive data signals, voice signals, video signals, and the like to and from other computing devices or radio devices (e.g., the fixed-location radio device 10 and the electronic device 12) via an external network (e.g., the Internet 16). In particular, the communications interface 116 may connect the server 18 to the Internet 16.

In one embodiment, the server 18 may be configured to host the described spectrum management and location-determining services for a plurality of electronic devices, including the fixed-location radio device 10 and, if appropriate, the electronic device 12. In some embodiments, the services may include verification of the reported location of the fixed-location radio device 10. The services may also include spectrum management functions, such as providing channel lists to qualified radio devices upon registration so as to allow the radio devices to make use of spectrum for wireless communications. Also, while the providing of services may be fully automated, the server 18 may host an Internet-style website for various corresponding parties to conduct initial enrollment with the server 18, conduct manual registration if needed, access various tools and reports supplied by the server 18, and so forth. For supplying the services, the server 18 may collect spectrum usage information from various sources, including but not limited to public databases, private databases and deployed radio devices (e.g., in the form of channel use selections or spectrum sensing results). The database information may contain information about known spectrum users, such as incumbent spectrum users (e.g., digital television stations, wireless microphone systems, cable head end systems, FM radio stations, etc.), licensed spectrum users, or radio systems that are exempt from seeking channel map information in order to operate.

### A(1). Example

In this example, an application (e.g., the location configuration function 72) is written for and installed on the electronic device 12. The application may be obtained from a website that is hosted by the server 12 or a commercial website from which applications for mobile devices are available. The application oversees the determining of a location, the scanning of a bar code on the fixed-location radio device 10 and the submitting of the resulting location data and key (derived from the bar code) to the server 18. Once the data is received by the server 18, the server 18 verifies the information. Database information stored by the server 18 for the fixed-location radio device 10 may be flagged by the server 18 for an update the next time the fixed-location radio device 12 makes communication with the server 18. The communication might be a request for spectrum access (e.g., a whitespace request), for example. At that time, the server 18 may supply the location associated with the received location data to the fixed-location radio device 10 so that the fixed-location radio device 10 may store the location and use the location in future spectrum access requests.

To configure the fixed-location radio device 10 with a location value, the user may launch the application on the electronic device 12. If not already enabled, the application may prompt the user to enable location services (e.g., turn on GPS capabilities) in a manner appropriate for the operating system of the electronic device 12. Next, the application will use the location services capability of the electronic device 12 to acquire the location of the electronic device 12. The application may display a map and indicate the position of the determined location (e.g., with a displayed pin). An estimation of the accuracy of the location measurement also may be displayed. In one embodiment, the map may be interactive and include features such as zoom in, zoom out, and panning.

If the accuracy is not equal to or less than 50 meters, the user may be prompted to reacquire the location until the location accuracy improves to equal or be less than 50 meters. The user may attempt to improve the accuracy by moving the electronic device 12, such as outdoors or away from obstructions. Once a location with an accuracy of 50 meters or less is acquired, the application may store coordinates for the determined location (the stored coordinates being the location data), the accuracy of the location data, and the time at which the location measurement was made. In one embodiment, the user may be permitted to move the pin to manually improve the accuracy of the location of the fixed-location radio device 10. The application may impose a limit on the amount that the pin may be moved, such as a limit of 50 meters. If the pin is manually moved, the location accuracy may be set to a predetermined value, such as a value of zero meters or a value of 50 meters.

Once location data with acceptable accuracy is obtained, the application may prompt the use to scan a bar code on the fixed-location radio device 10. For this purpose, a "scan" button may be displayed. When the scan button is selected, the electronic device 12 scans the bar code. The application may track the amount of time between making the location measurement with acceptable accuracy and scanning the bar code. If more than a predetermined time elapses between these two events, then the application may return to the beginning of the process. The predetermined amount of time may be, for example, five minutes or some other amount of time. In one embodiment, the data obtained from scanning the bar code contains information to identify the fixed-location radio device, such as FCCID and serial number of the fixed-location radio device 10.

In one embodiment, the application causes the electronic device 12 to display identifying information for the fixed-location radio device (e.g., the FCCID and serial number), the coordinates of the determined location, the location accuracy, and a button to submit these items of information to the server 18. In one embodiment, the user may enter other information used in a registration process for the fixed-location radio device 10. This information could include, for example, information about the fixed-location radio device 10 (e.g., antenna height, settings, etc.), information about the owner or operator of the fixed-location radio device 10 (e.g., contact information), or information about the user of the electronic device 12 during the configuration process.

The user may cause the electronic device 12 to transmit the information collected in the foregoing steps to the server 18 by activating the submit button. In one embodiment, the application may track the amount of time between making the location measurement with acceptable accuracy and activating the submit button. If more than a predetermined time elapses between these two events, then the application may return to the beginning of the process rather than submit the information to the server 18. The predetermined amount of time may be, for example, five minutes or some other amount of time.

Upon successful submission of the information to the server 18, the server may evaluate the submitted information and, if the information passes a validation check, the server may communicate the location represented by the submitted location data to the fixed-location radio device 10. The fixed-location radio device 10 may then use the location supplied by the server 18 as the location of the fixed-location radio device 10 during future operations, such as during a request for spectrum access.

### B. Location Verification Using Sensing Data

### B(1). Introduction

In view of the need for accurate location reporting by radio devices, methods and systems for verifying the accuracy of a self-reported location of a radio device will be described. In one approach described in this disclosure document, a predicted RF footprint (also referred to as a "location fingerprint") is determined for the reported location of a radio device. The predicted RF footprint is generated by analyzing transmission information for transmitters with known locations in the vicinity of the radio device and with known broadcast characteristics (e.g., antenna height, gain and emission characteristics). The analysis is used to generate an induced noise floor prediction for each of multiple channels at the reported location, and the predictions for each channel combine to form the predicted RF footprint. In other words, if the radio device were to measure RF energy for each of the channels, the radio device should make measurements that correlate to the induced noise floor predictions for the channels.

Exemplary transmitters considered during the analysis are TV broadcast transmitters. The predicted RF footprint tends to vary as a function of location. Predicted RF footprints vary enough with respect to location that the predicted RF footprint for a location may be consider unique enough to be used as a verification tool to verify the reported location of the radio device.

In one exemplary implementation, an electronic device reports its current location to a spectrum management server. The electronic device also senses RF energy on a set of channels (e.g., a predetermined list of TV channels) and reports the detected energy values to the spectrum management server. The spectrum management server generates a predicted RF footprint for the reported location and compares the sensing information from the electronic device against the predicted RF footprint. If the predicted RF footprint and the sensing information correlate, then a conclusion is made that the electronic device is actually present in the reported location. If the predicted RF footprint and the sensing information do not correlate, then a conclusion is made that the electronic device is not present in the reported location.

In the described and illustrated embodiments, the electronic device includes a radio for engaging in wireless communications with other electronic devices and performs spectrum sensing. In one embodiment, the electronic device is a television band radio device (TVBD) that seeks a channel list of available TV white space channels from the spectrum management server. The available channels may be used by the electronic device to carry wireless communications in a spectrum sharing environment.

For purposes of description, the electronic device will be described in the context where the electronic device is a TVBD. It will be appreciated, however, that the electronic device may be another type of device, such as a mobile telephone, a computer (e.g., a laptop computer or a tablet computer), a mobile WiFi hotspot device, a media player, a gaming device, a personal digital assistant (PDA), an electronic book reader, a WiFi router, a wireless access point, etc. The electronic device may have a fixed location or may be portable. It will be understood that each described electronic device may be an electronic system that includes one or more than one device that is capable of performing radio sensing or wireless communications. As an example, the electronic device may be a radio system, such as a network that offers connectivity services to client devices.

In the context of white spaces, the white spaces may be television white spaces or some other form of useable spectrum that is interleaved with spectrum used by incumbent, licensed or existing users, even if that spectrum is not referred to as white space by a governing regulatory entity. It will be appreciated, however, that the techniques described in this document may apply to other situations, including situations that do not involve the selection of an operational channel.

Aspects of the disclosed systems and methods are independent of the type or types of devices that may use spectrum. As such, the systems and methods may be applied in any operational context for wireless communications, and wireless communications are expressly intended to encompass unidirectional signal transmissions (e.g., broadcasting of a signal for receipt by a device without response) and to encompass bidirectional communications where devices engage in the exchange of signals. The methods and systems may be applied to dumb and/or cognitive radio devices. The methods and systems may be applied to licensed or unlicensed spectrum. Furthermore, the methods and systems are generic to modulation schemes, harmonic considerations, frequency bands or channels used by the electronic device, the type of data or information that is transmitted, how the electronic device uses received information, and other similar communications considerations. Thus, the systems and methods have application in any suitable environment.

In embodiments in this disclosure, the electronic device senses electromagnetic spectrum and transmits corresponding sensing data to a server. The server may normalize and/or calibrate the sensing data prior to analyzing the sensing data. The server also may undertake other spectrum management functions, such as responding to white space channel list requests with appropriate channel lists. Therefore, in some embodiments, the server may be considered a central white space registration system.

### B(2). System Architecture

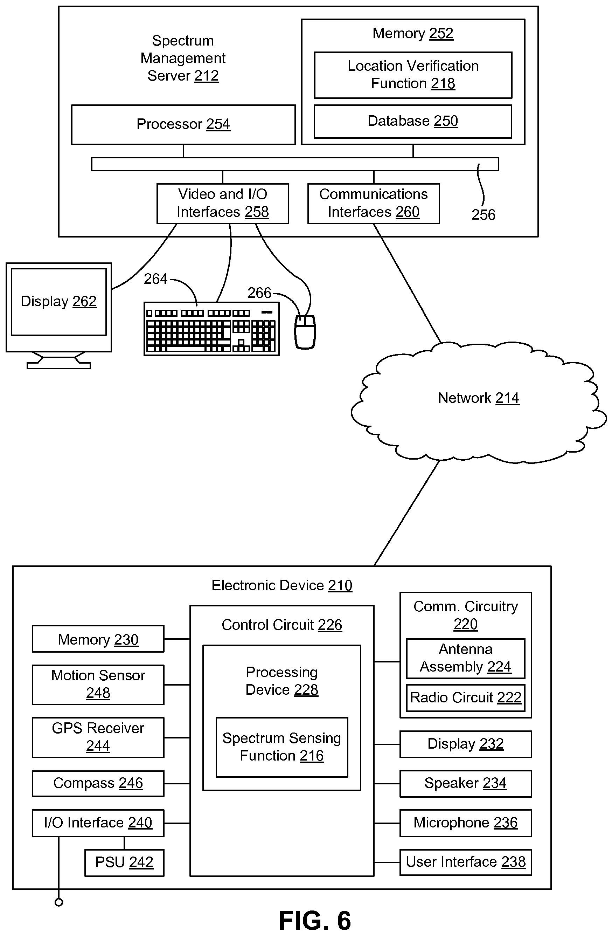

Referring to FIG. 6, shown is a system that includes an electronic device 210 and a spectrum management server 212. The electronic device 210 may be the fixed-location radio device 210, the electronic device 212, or some other device. The server 212 may be server 18 or another server.

The electronic device 210 typically, but not necessarily, has Internet communication capabilities via a wireless and/or wired connection. The electronic device 210 may be any type of electronic device, as indicated above. The server 212 communicates with the electronic device 210 and other devices over any appropriate medium. For example, the electronic device 210 may communicate with the server 212 through a network 214, such as the Internet. The server 212, in addition to providing location verification functions, may be a central white space registration system or some other form of spectrum management platform.

The electronic device 210 is capable of sensing the signal strength of radio frequency signals on various frequencies to which the electronic device 210 is capable of tuning. The measurements are commonly, but not necessarily, made in terms of decibels per hertz. The electronic device 210 may have a known antenna pattern. The electronic device 210 is location aware (e.g., capable of determining its geo-locations using GPS or other location-determining technology or, in the case of a fixed location device, stores location data).

The electronic device 210 may include a spectrum sensing function 216 and the server 212 may include a location verification function 218. The spectrum sensing function 216 and the location verification function 218 may cooperate with each other to verify the location of the electronic device 210.

The electronic device 210 includes communications circuitry 220. In the illustrated exemplary embodiment, as part of the communications circuitry 220, the electronic device 210 includes a radio circuit 222 and an antenna assembly 224. The communications circuitry 220 may be used to carry out various wireless communications functions, including communicating with the server 212. In the exemplary case where the electronic device 210 is a mobile telephone, the communications functions may include engaging in voice or video calls, and sending or receiving messages (e.g., email messages, text messages, multimedia messages, instant messages, etc.), accessing the Internet, etc.

The illustrated components of the communications circuitry 220 may represent one or more than one radio transceiver to enable the electronic device 210 to be able to communicate over various types of network connections and/or protocols. For instance, the electronic device 210 may be configured to communication with a cellular communications network. Exemplary cellular communications network types include, by are not limited to, networks operating in accordance with global system for mobile communications (GSM), enhanced data rates for GSM evolution (EDGE), code division multiple access (CDMA), wideband CDMA (WCDMA), integrated services digital broadcasting (ISDB), high speed packet access (HSPA), or any other appropriate standard or advanced versions of these standards. The cellular communications networks may be compatible with 3G and/or 4G protocols. Additionally, or as an alternative to cellular communications capability, the electronic device 210 also may be configured to communicate with other types of networks, such as a packet-switched network. An exemplary packet-switched network includes a network configured in accordance with IEEE 802.11 (e.g., IEEE 802.11a, IEEE 802.11b, or IEEE 802.11n), each of which are commonly referred to as WiFi. Another exemplary packet-switched network includes a network configured in accordance with IEEE 802.16 (commonly referred to as WiMAX).

The gain pattern of the antenna assembly 224 may be known. The gain is specified with respect to the structure of the antenna 224, which is typically fixed relative to a housing of the electronic device 210. An exemplary gain pattern for the antenna assembly 224 is an omni-directional ("omni") pattern, but other patterns are possible. In other embodiments, the gain (or directivity of the antenna) is variable. For example, the antenna assembly 224 may be controlled to have a gain selected from two or more predetermined profiles. In still another embodiment, the antenna assembly 224 may be controlled to customize the gain.

Overall functionality of the electronic device 210 may be controlled by a control circuit 26 that includes a processing device 228. The processing device may execute code stored in a memory within the control circuit 226 and/or in a separate (e.g., memory 230) in order to carry out the operations of the electronic device 210. For instance, the processing device 228 may be used to execute the spectrum sensing function 216. The memory 230 is a non-transitory computer readable medium and may be, for example, one or more of a buffer, a flash memory, a hard drive, a removable media, a volatile memory, a non-volatile memory, a random access memory (RAM), or other suitable device. In a typical arrangement, the memory 230 includes a non-volatile memory for long term data storage and a volatile memory that functions as system memory for the control circuit. The memory 230 may exchange data with the control circuit 226 over a data bus. Accompanying control lines and an address bus between the memory 230 and the control circuit 226 also may be present.

The electronic device 210 may include a display 232 for displaying visual information to a user. Also, the electronic device 210 may include a speaker 234 and a microphone 236 to allow the user to carry out voice conversations. One or more user interfaces 238, such as a keypad and/or a touch-sensitive input associated with the display 232, may be present to provide for a variety of user input operations.

The electronic device 210 may further include one or more input/output (I/O) interface(s) 40. The I/O interface(s) 240 may include one or more electrical connectors for connecting the electronic device 210 to another device (e.g., a computer) or an accessory (e.g., a personal handsfree (PHF) device) via a cable, and/or for connecting the electronic device 210 to a power supply. Therefore, operating power may be received over the I/O interface(s) 240 and power to charge a battery of a power supply unit (PSU) 242 of the electronic device 210 may be received over the I/O interface(s) 240. The PSU 242 may supply power to operate the electronic device 210 in the absence of an external power source.

A position data receiver, such as a global positioning system (GPS) receiver 244, may be involved in determining the location of the electronic device 210. A compass 246 may be used to determine the orientation of the electronic device 210 and, more specifically, the direction (e.g., azimuth) of a bore sight of the antenna assembly 224. It will be appreciated that the azimuth of the antenna assembly 224 will change with changes in orientation of the electronic device 210. In one embodiment, the electronic device 210 is configured to determine the compass direction of the antenna assembly 224 and include this information in sensing data transmitted by the electronic device 210 to the server 212.

One or more motion sensors 248, such as accelerometers, may be used to sense movement of the electronic device 210. The motion sensors 248 may be used to determine compass direction of the electronic device 210 or inclination of the antenna assembly 224 (e.g., angle of the antenna assembly 224 with respect to horizontal or vertical inclination).

The server 212 may be implemented as a computer-based system that is capable of executing computer applications (e.g., software programs), including the location verification function 218. The location verification function 218 and a database 250 may be stored on a non-transitory computer readable medium, such as a memory 252. The database 250 may be used to store various information sets used to carry out the functions described in this disclosure. The memory 252 may be a magnetic, optical or electronic storage device (e.g., hard disk, optical disk, flash memory, etc.), and may comprise several devices, including volatile and non-volatile memory components. Accordingly, the memory 252 may include, for example, random access memory (RAM) for acting as system memory, read-only memory (ROM), hard disks, optical disks (e.g., CDs and DVDs), tapes, flash devices and/or other memory components, plus associated drives, players and/or readers for the memory devices.

In addition to storing sensing data received from the electronic device 210, the server 212 may store or access data about known high power transmitters (e.g., television stations, FM radio stations, or other transmitter devices or beacons with known and stable transmission characteristics). The server 212 also may carry out functions to determine predicted field strength of emissions from high power transmitters at the reported location of the electronic device 210.

To execute logical operations, the server 212 may include one or more processors 254 used to execute instructions that carry out logic routines. The processor 254 and the memory 252 may be coupled using a local interface 256. The local interface 256 may be, for example, a data bus with accompanying control bus, a network, or other subsystem.

The server 212 may have various input/output (I/O) interfaces 258 as well as one or more communications interfaces 260. The interfaces 258 may be used to operatively couple the server 212 to various peripherals, such as a display 262, a keyboard 264, a mouse 266, etc. The communications interface 260 may include for example, a modem and/or a network interface card. The communications interface 260 may enable the server 212 to send and receive data signals, voice signals, video signals, and the like to and from other computing devices via an external network. In particular, the communications interface 260 may connect the server 212 to the network 214.

In one embodiment, the server 212 may be configured to host the below-described services for a plurality of electronic devices, including the electronic device 210. In some embodiments, the services may include verification of the reported location of the electronic device 210. The services may also include spectrum management functions, such as providing channel lists to qualified radio devices upon registration so as to allow the radio devices to make use of spectrum for wireless communications. Also, while the providing of services may be fully automated, the server 212 may host an Internet-style website for the various corresponding parties to conduct initial enrollment with the server 212, conduct manual registration if needed, access various tools and reports supplied by the server 212, and so forth. For supplying the services, the server 212 may collect spectrum usage information from various sources, including but not limited to public databases, private databases and deployed radio devices (e.g., in the form of channel use selections or spectrum sensing results). The database information may contain information about known spectrum users, such as incumbent spectrum users (e.g., digital television stations, wireless microphone systems, cable head end systems, FM radio stations, etc.), licensed spectrum users, or radio systems that are exempt from seeking channel map information in order to operate.

### B(3). Exemplary Spectrum Environment

Available, interference-free spectrum for supporting wireless communications is a scarce resource and the demand for wireless communications is increasing. The following techniques assist in using spectrum efficiently by verifying the location of an electronic device is so that spectrum allocated and used by the electronic device has minimal risk of interfering with the operations of incumbent spectrum users.

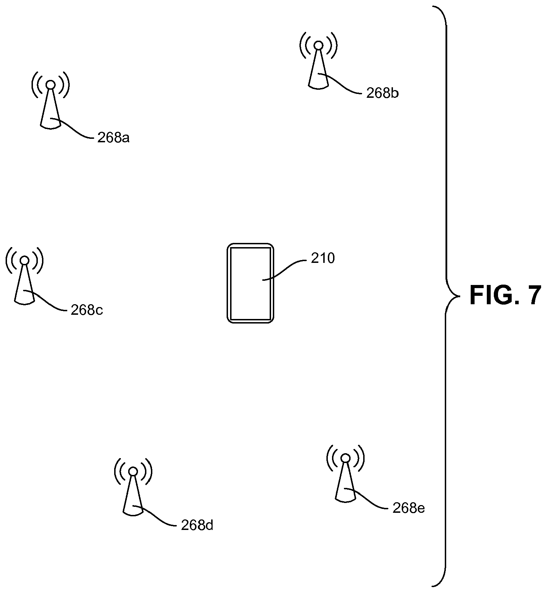

With additional reference to FIG. 7, the techniques will be described in an exemplary environment where at least one low-powered electronic device (e.g., electronic device 210) and high-powered protected transmitters 268 share a common set of bands. In the illustrated exemplary embodiment, the electronic device 210 includes a low-power, broadband data transceiver (e.g., TVBD) that operates with a transmit power at about +30 dbm in white spaces that are interleaved with channels used by television transmitters (the devices 268) that can operate with a transmit power up to +90 dbm. The high-powered transmitters 268 operate in respective protected areas. The protected areas are established to reduce interference to the receipt of signals from the transmitters 268 by limiting the use of the channel on which the transmitter 268 operates (referred to as the primary channel of the transmitter 268) by other devices in the protected area. In the illustrated example, there are five high-powered transmitters 268 (identified as 268a through 268e), but there may be more than or fewer than five transmitters 68 that have an effect on signal strengths on various channels at the location of the electronic device 210. It will be appreciated that the schematic illustration of the locations of the radio devices 210 and 268 in FIG. 7 is not to scale, but is used to represent relative positioning of the electronic device 210 and the transmitters 268. For purposes of description, however, the electronic device 210 is assumed to be within the protected area of each of the transmitters 268.

The availability of certain frequencies, such as white space channels, is a function of time, channel use, and geographic area. By comparison, high-power transmitters often broadcast at hundreds of kilowatts or higher (e.g., about one megawatt) and with high-elevation antennas, whereas the low-power devices typically rely on transmitters of about one watt or less and are deployed with lower elevation antennas. The high-power transmitters operating in VHF and UHF frequencies have a vast reach that affects the induced noise floor over very large areas (e.g., hundreds of miles). Also, out-of-band emissions by high-power transmitters can have large contributions to induced noise floor on channels adjacent each high-power transmitter's primary channel.

### B(4). Location Verification

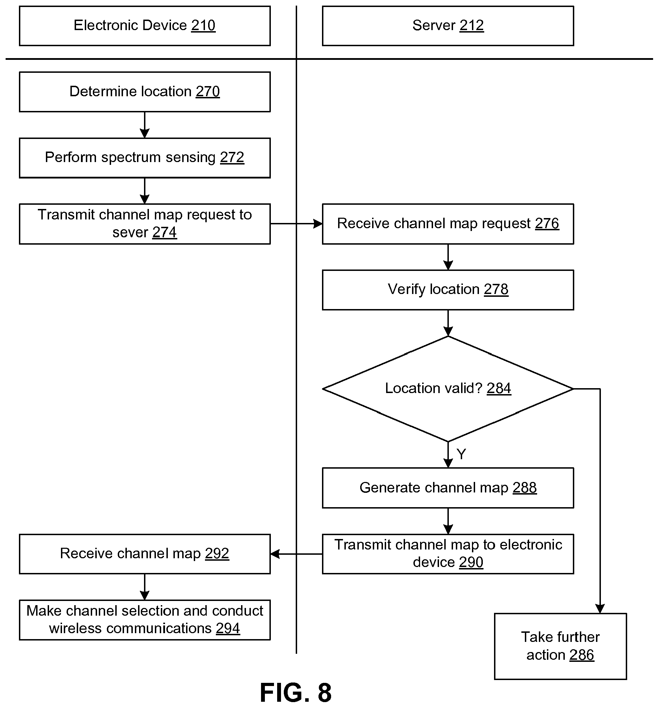

With additional reference to FIG. 8, illustrated are logical operations carried out by the electronic device 210 and carried out by the server 212 to implement respective methods of verifying the location of the electronic device 210. The exemplary methods may be respectively carried out by cooperatively executing an embodiment of the spectrum sensing function 216 and an embodiment of the location verification function 218. Thus, the flow diagram may be thought of as depicting steps of one method carried out by the electronic device 210 and another method carried out by the server 212. Although the flow chart shows a specific order of executing functional logic blocks, the order of executing the blocks may be changed relative to the order shown. Also, two or more blocks shown in succession may be executed concurrently or with partial concurrence. One or more blocks may be omitted.

In block 270, the electronic device 210 determines its current location. For a fixed location device, the determination of location may include accessing a stored location value from the memory 230 of the electronic device 210. For a fixed location device or a mobile device, the determination of location may include using a location determination means, such as the GPS receiver 244. Other location determining means includes using assisted GPS (A-GPS), using cellular network location services (e.g., cellular base station triangulation), using Internet-based location services (e.g., a location service that determines location based on wireless LAN detection), or using some other location assessment technique.

In block 272, the electronic device 210 performs sensing of radio frequency signals in the electromagnetic spectrum. Typically, the electronic device 210 will make signal strength measurements (e.g., determine received signal strength indication or RSSI) for each channel in a set of channels. The set of channels may be predetermined and selected to coordinate with the location verification operations of the server 212. In the exemplary context of a TVBD, the set of channels may include VHF or UHF channels.

In one embodiment, the orientation of the electronic device 210 in terms of compass direction of the antenna assembly 224 is obtained. When the antenna assembly 224 does not have an omni-directional configuration, antenna direction and the relative orientation of RF transmitters to the electronic device 210 may be useful when predicting the signal strength of RF signals that the electronic device 210 should detect in the location determined in block 270.

In block 274, the electronic device 210 transmits a channel map request to the server 212. The channel map request (also referred to as a white space registration request) may be replaced with another form of spectrum allocation request in situations where the electronic device 210 does not rely on available white space channels for wireless communications. In still other embodiments, the transmission to the server need not be a spectrum allocation request. Rather, the electronic device 210 may seek confirmation of its location for a reason other than obtaining an identification of available spectrum that may be used by the electronic device 210 for wireless communications.

As part of the transmission in block 274, the electronic device 210 includes the location determined in block 270, the results of the spectrum sensing in block 272, and, if appropriate, the compass direction of the antenna assembly 224 and configuration information for the antenna assembly 224. In one embodiment, two or more of the determination of location (block 270), the spectrum sensing (block 272), and the transmission (block 274) are performed within a predetermined period of time, such as within one minute or within five minutes. The predetermined amount of time is used to minimize the potential for the electronic device 210 to change location during these steps. The transmission of block 274 is received by the server 212 in block 276.

In block 278, the server 212 verifies the location of radio device 210 that was reported as part of the transmission in block 274. According to one embodiment, the verification is performed by correlating the results of the spectrum sensing from block 272 with a prediction of the wireless environment that ought to be detected by the electronic device 210 if the electronic device 210 is truly located in the reported location. The prediction of the wireless environment may be in the form of a predicted RF footprint for the location. In one approach, a predicted RF footprint (also referred to as a "location fingerprint") is determined for the reported location of the electronic device 210. The predicted RF footprint is generated by analyzing transmission information for transmitters (e.g., transmitters 268) with known locations in the vicinity of the electronic device 210 and with known broadcast characteristics (e.g., antenna height, gain and emission characteristics).

The analysis is used to generate an induced noise floor prediction for each of multiple channels at the reported location. In predicting the wireless environment for the location, the server 212 determines predicted field strength (or induced noise) as a function of frequency for each channel in the predetermined set of channels for which the electronic device 210 reported spectrum sensing results. The predicted field strength for each channel may be determined using at least one path loss model that takes into consideration primary channel contributions by the known transmitters. In another embodiment, the predicted field strength for each channel may be determined using at least one path loss model that takes into consideration primary channel contributions by the known transmitters and out-of-band contributions by the known transmitters.

In one embodiment, each high-power transmitter 268 having a coverage area in which the electronic device 210 is located is used in generating the predicted RF footprint. In another embodiment, a selected subset of the high-power transmitters 268 having a coverage area in which the electronic device 210 is located is used in generating the predicted RF footprint. In the TV whitespace embodiment, the protected, high-power transmitters 268 used in generating the predicted RF footprint are typically the transmitters of television stations. The transmission characteristics of television stations are well-known and relatively constant. The known characteristics of the transmitters 268 include, but are not limited to, location, antenna height, transmit power, antenna configuration, and so forth. Also known is the terrain between each transmitter 268 and the reported location of the electronic device 210, as well as the setting in terms of urban environment or rural environment. Using this information, a predicted signal strength value for each of the reference channels at the reported location of the electronic device 210 may be determined using a path loss model. Exemplary path loss models that may be employed include, but are not limited to, Longley Rice, F-curves, R6602, ITU P. 1546 and Raleigh fading. The predicted signal strength values may be determined in terms of electric field strength (e.g., in dbuV/m). Transmitters other than or in addition to television station transmitters may be employed, especially when the electronic device 210 is not a TVBD. For example, FM radio transmitters or any other stable transmitters with known transmission characteristics may be used.

Together, the induced noise floor predictions for each channel in the set of predetermined channels combine to form the predicted RF footprint. Exemplary transmitters considered during the analysis are TV broadcast transmitters, but additional or alternative transmitters may be considered. As will be appreciated, TV band signal strengths are predictable for a location and provide a reference that may be updated when there are changes in high-powered television transmitters in terms of the deployment of new transmitters, changes in the broadcast characteristics of existing transmitters, and termination of broadcasts from previously used transmitters.

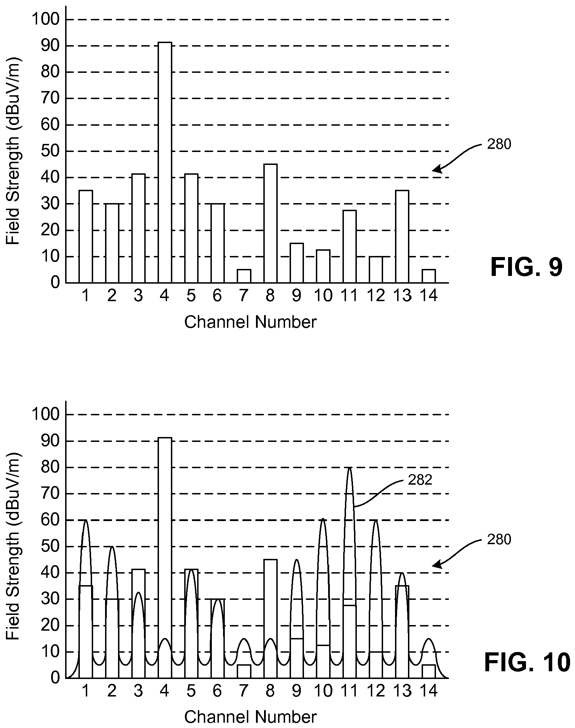

With additional reference to FIG. 9, shown is a prophetic example of a predicted spectrum profile for TV band emissions in channels 1 through 14 at the reported location of the electronic device 210. As illustrated, the predicted signal strength at the location for each channel varies from channel to channel. The predicted signal strengths are represented by bars 280 in FIG. 9. The differences in predicted signal strengths across the channels are used as a unique RF footprint for the location.

As part of the verification, the signal strength data received from the electronic device 210 is compared to the predicted RF footprint. In one embodiment, the spectrum sensing data received by the electronic device 210 is processed to eliminate or account for characteristics of the electronic device 210 before the comparison is made. For example, location, antenna configuration, orientation, and operational performance of the electronic device 210 all may affect signal strength measurements. To improve the usefulness of spectrum sensing data, the received data may be normalized and/or calibrated. This allows for improved assessment of the sensing data against the predicted RF footprint by accounting for the antenna configuration and/or antenna orientation of the electronic device, operational performance of the electronic device, and/or the manner in which the electronic device 210 conducts spectrum sensing (e.g., the bandwidth resolution used during spectrum sensing and the measurement units).

Thus, in one embodiment, the predicted signal strength value for each reference channel is adjusted to account for characteristics of the electronic device 210. For instance, the predicted signal strength value may be adjusted for the antenna configuration and orientation of the electronic device when determining predicted receive power that the electronic device 210 ought to detect. The adjustment may be made by adding (or subtracting) a relative gain adjustment value, which may vary according to channel. In another embodiment, the predicted signal strength value for each reference channel is determined under the assumption that the electronic device 210 has an omni-directional antenna. This assumption also may be made if the orientation of the electronic device 210 is not known. In some cases, the orientation of an electronic device 210 may be estimated using the reported device location, antenna configuration and sensed signal strengths as compared to predicted signal strength values to find gross-scale lulls or peaks in detected signal strengths that might correspond to the antenna configuration that can be mapped to azimuths from the electronic device 210 to the reference high-power transmitters 68. In the case where the antenna 224 is assumed to be or actually is an omni-directional antenna, the relative gain adjustment value is zero.

In one embodiment, the predicted signal strength values for the location reported by the electronic device 210 may be calculated under the assumption that the electronic device 210 is outdoors. But the electronic device 210 may actually be situated such that differences between predicted and actual values are exacerbated. For example, the electronic device 210 may be inside a building and/or heavily obstructed by terrain, structures or buildings. In these situations, the electronic device 210 will detect lower field strengths than it would otherwise, due to attenuation of the buildings or obstructions. Similar differences may occur if the antenna assembly 224 of the electronic device 210 is broken, misaligned, or poorly installed. Therefore, in one approach, adjustments may be made to the predicted signal calculations to adjust for known or probable environmental conditions affecting signal strength measurements made by the electronic device 210. To facilitate making these corrections, the electronic device 210 may report, as part of the transmission of block 274, the environment of the electronic device 210, such as outdoors/urban, outdoors/rural, indoors/residential building, indoors/commercial building, etc. This information may be obtained from a user of the electronic device 210. Alternatively, if it is found that the measured signal strengths correlate to the predicted signal strengths, but for an attenuation factor across multiple channels (e.g., all channels, on channels on which high signal strengths are predicted, or on channels on which moderate or low signal strengths are predicted), then it may be concluded that one or more of the foregoing conditions is present and the predicted signal strengths and/or the correlation approach may be adjusted.

Other or additional compensation techniques are possible. For example, in one embodiment, multiple spectrum measurements are taken by the electronic device 210 as a function of time and compared to predicted spectrum values. In another embodiment, specific frequencies exhibiting higher measured signal strengths are weighted more heavily than frequencies with lower signal strengths during correlation of the two data sets. This may assist in accounting for the effects of directional antennas and terrain.

To correlate the predicted values and the reported values, a matching technique may be employed. Since an exact match is unlikely, the analysis may involve approaches similar to those taken in voice or speech recognition algorithms or fingerprint matching algorithms, in which a sample is analyzed and compared to one or more references. In this case, the predicted RF footprint may be considered a reference pattern and the pattern of the sensing data from the electronic device 210 is compared against the predicted RF footprint. If there is a high degree of correlation between the patterns, then the two data sets may be determined to match and the reported location may be considered accurate. On the other hand, if a low degree of correlation exists, then a match is not found and the reported location may be considered inaccurate.

With additional reference to FIG. 10 a prophetic example of spectrum sensing data, represented by line 282, is graphed over the prophetic example of the RF footprint shown in FIG. 9. In this example, there is low correlation between the patterns derivable from the two data sets and, therefore, the location reported by the electronic device will be considered to be inaccurate. Low correlation may be determined since the signal strength measured on a relatively large number of the channels differs significantly from the predicted value, such as on channels 1, 2, 4 and 8-12. Some of the signal strengths correlate closely or relatively closely (e.g., channels 3, 5, 6, 7, 13 and 14). But due to the large differences on a high percentage of the channels, an overall correlation between the data sets is not found in this example. For instance, where a spike is expected for channel 4, a lull is reported by the electronic device 210 and where relative lulls are expected at channels 10-12, relatively high energy values are reported by the electronic device 210.

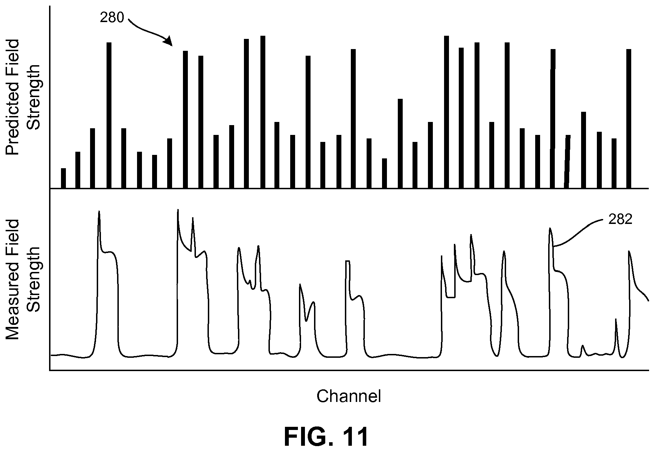

With additional reference to FIG. 11, prophetic example data sets for predicted signal strengths and measured signal strengths are shown, respectively using bars 80 and line 282. In this exemplary chart, there is high correlation between the predicted signal strengths and measured signal strengths. For instance, where "spikes" in predicted signal strengths occur, there are also "spikes" in measured signal strengths. Also, where there are "lulls" in predicted signal strengths, there are also "lulls" in measured signal strengths.

In one exemplary correlation technique, the difference between the predicted value and measured value is determined for each channel in which data is collected. The absolute value of each difference in signal strength values may be considered a channel error value. The differences (the channel error values) are summed. The total is an aggregate error value. The inverse of the aggregate error value is taken and is considered to be a matching metric used to validate the reported location. The lower the matching metric, the higher the likelihood that the radio device is actually in the reported location and the higher the matching metric, the lower the likelihood that the radio device is actually in the reported location (with the possible exception of obstructions as discussed below). In one embodiment, a threshold matching metric value may be established. If the matching metric is lower than the threshold matching metric value, then the location reported by the electronic device 210 may be considered valid. Conversely, if the matching metric is higher than the threshold value, then the location reported by the electronic device 210 may be considered invalid.

In another exemplary correlation technique, if the data sets have a signal strength difference of greater than a predetermined percentage (e.g., 25 percent) on more than a predetermined number of the channels (e.g., 25 percent of the channels), then there a determination may be made that the data sets lack correlation. However, as indicated above, the predicted signal strengths and/or the correlation technique may be adjusted in cases where it is probable that the electronic device 210 is indoors. In this exemplary correlation technique, the predetermined percentage for signal strength difference may be adjusted on a channel by channel basis according to the probable attenuation effect on the measured signal strengths. This increases the tolerance for the possibility that the electronic device 210 is indoors. In another approach, the correlation technique may assess the pattern of relative signal strength differences between the measured and predicted signal strengths to so as to place less emphasis on numerical amplitude differences.

The correlation between predicted and measured results can also be used to generate a Diameter of Precision (DOP) metric that is used during future location validations. In one embodiment, the comparison provides a confidence level in the location and operation of the electronic device 210, depending on how well the calculated and measured values match or correlate. The quality of the match may be quantified in a correlation factor and/or may trigger further analysis or action by the electronic device 210 and/or the server 212 to determine the actual cause of any deviation, or undertake corrective action or "policing" of the radio device. These additional actions are discussed below in greater detail.

In other embodiments, correlation results may be made more accurate by comparing the spectrum sensing results from several electronic devices in the same general area as the electronic device 210. The general area in which to consider measurements made by other devices may be an area within a predetermined radius from the reported location, such as, but not limited to a radius of 50 meters, a radius of 100 meters or a radius of 250 meters. The measurements from other radio devices may be used to calibrate or compare measurements to determine if the electronic device 210 is reporting reasonable spectrum measurement results for the reported located.

There may be more than one reason why predicted results do not correlate with measured results reported by the radio device. As indicated, these reasons may include obstructions and an inaccuracy in the reported location. Another reason may be that the prediction model is not well-refined for the reported location of the radio device. To overcome this possibility, the server may leverage its ability to collect and analyze information from a variety of sources. In one approach, signal strength measurements from a variety of radios at respective locations that are collected over time and used to assist in verifying the location of the reporting electronic device 210. For instance, if the measured results from the reporting electronic device 210 do not correlate with measurements from similar radios made in a similar location (e.g., within 500 meters of the reporting radio device), then a determination may be made that the reporting radio is not accurately reporting location information. But if the reported measurements results do correlate with measurements from similar radios, then the prediction model may be recursively adapted to take into consideration the consistent measurement results of the various radios that are located near one another. For example, computational or weighting factors in the applied path loss model may be changed and/or a different path loss model may be used.

Continuing with the flow diagram of FIG. 8, a determination is made as to whether the reported location is valid in block 284. If the measured spectrum environment reasonably correlates with the predicted spectrum environment (noting that the analysis may be adjusted as a function of location, uncertainty, confidence, measurement capability of the radio, etc.) then it can be determined that the electronic device 210 is located at the reported location and a positive determination is made in block 284. If the measured spectrum environment does not reasonably match the predicted spectrum environment then it can be determined that the electronic device 210 is not located at the reported location and a negative determination is made in block 284.

If a negative determination is made in block 284, the logical flow may proceed to block 286 where further action may be taken. For instance, manual verification of the location may be carried out or verification of the location may be made by another electronic device that is trusted by the server 212 and located near the reporting electronic device 210. In some situations, if the reported location is not validated, then additional analysis of the predicted and report signal strengths may be carried out to attempt to better understand the differences, such as to attempt to identify an obstruction that is blocking signals in a certain range of angles relative to the electronic device 210. If a conclusion is made that an obstruction is present, then the affected channels may be ignored.

If it is determined that the electronic device 210 is not in the reported location, a policing action may be carried out. The policing action may involve refusing to provide spectrum allocations (e.g., an available channel list) to the requesting electronic device 210. Another exemplary policing action may be to report the electronic device 210 to a regulatory authority for further verification or other actions.

If a positive determination is made in block 284, the logical flow may proceed to block 288. In block 288, the server 212 generates a channel list of available TV white spaces for the reported location of the electronic device 210. In cases where the electronic device 210 is not a TVBD, a different type of spectrum allocation may be generated. In some embodiments, such as when only location verification is the task to be carried out, the server 212 does not generate a spectrum allocation. In block 290, the channel list or other spectrum allocation is transmitted by the server 212 to the electronic device 210.

The electronic device 210 receives the channel list or other spectrum allocation in block 292. In block 294, the electronic device 210 may select an available channel to use for wireless communications and engage in wireless communications with one or more other radio-based electronic devices.

### C. Conclusion

Although certain embodiments have been shown and described, it is understood that equivalents and modifications falling within the scope of the appended claims will occur to others who are skilled in the art upon the reading and understanding of this specification.

## Claims

1. A method of configuring a fixed-location radio device (10) with location information, the method comprising:
during a configuration mode, receiving location data representing a location of an electronic device (210) separate from the fixed-location radio device (10), the electronic device (210) having location determining capability and located in close proximity to the fixed-location radio device when the location data is determined by the electronic device, and the location of the electronic device (210) functioning as a proxy for the location of the fixed-location radio device;
during the configuration mode, populating by a location configuration function (72) a location configuration field stored by the fixed-location radio device (10) with a location value matching the location represented by the location data, the populated location value representing the geographic location of the fixed-location radio device, wherein the location data is determined by the electronic device (210)and received by the fixed-location radio device within a predetermined amount of time as part of a validity check to ensure that the location of the electronic device is determined in close proximity to the actual geo-location of the fixed-location radio device; and
during an active state, requesting spectrum access from a spectrum management server (212) to spectrum that is available for use by the fixed-location radio device to carry out wireless communications at the geographic location represented by the location value.

2. The method of claim 1, wherein the received location data is received from the electronic device over a direct communication link between the fixed-location radio device and the electronic device.

3. The method of claim 1, wherein the received location data is received from a remote server, the server having received the location data from the electronic device.

4. The method of claim 1, the method further comprising verifying that the fixed-location radio device and the electronic device are within the close proximity to each other when the location data is determined by the electronic device, the close proximity being 50 meters or less.

5. The method of claim 4, the verifying comprising determining that the location data is received over one of a short-range wireless communication connection between the electronic device and the fixed-location radio device or a wired communication connection between the electronic device and the fixed-location radio device.

6. The method of claim 5, wherein the location data further includes data representing the time the location data was determined, the method further comprising verifying that the location data was generated within a predetermined time before the location data is one of received by the fixed-location radio device or received by a remote server from the electronic device.

7. The method of claim 4, the verifying comprising:
receiving a key from the electronic device; and
verifying at least two of:
the key has a valid value;
the key is not expired;
less than a predetermined amount of time has elapsed since the key was transferred to or obtained by the electronic device; and
the key was one of transferred to the electronic device, obtained by the electronic device, or received from the electronic device when the electronic device is in close proximity with the fixed-location radio device.

8. The method of claim 4, the verifying comprising measuring signal strength on predetermined channels and transmitting measured signal strength values to a server for comparison to a predetermined spectrum footprint for the location.

9. The method of claim 1, wherein the location data further includes data representing the time the location data was determined, the method further comprising verifying that the location data was generated within a predetermined time before the location data is one of received by the fixed-location radio device or received by a remote server from the electronic device.

10. The method of claim 1, further comprising monitoring to determine if the fixed-location radio device has moved in a manner that indicates potential for the fixed-location radio device to have changed actual geographic location and, if so, repeating the receiving and populating steps.

11. A fixed-location radio device (10), comprising:
a radio transceiver for establishing wireless communications;
a memory (66); and
a control circuit (64) that controls operation of the fixed-location radio device and causes the fixed-location radio device to:
during a configuration mode, receive location data representing a location of an electronic device separate from the fixed-location radio device, the location of the electronic device functioning as a proxy for the location of the fixed-location radio device, wherein the location data is determined by the electronic device (10) and received by the fixed-location radio device within a predetermined amount of time as part of a validity check to ensure that the location of the electronic device is determined in close proximity to the actual geo-location of the fixed-location radio device;
during the configuration mode, populate a location configuration field stored in the memory with a location value matching the location represented by the location data, the populated location value representing the geographic location of the fixed-location radio device; and
during an active state, request spectrum access from a spectrum management server (212) to spectrum that is available for use by the fixed-location radio device (10) to carry out wireless communications at the geographic location represented by the location value.

## Patentansprüche

1. Verfahren, um eine Funkvorrichtung (10) mit festem Standort mit Standortinformationen zu konfigurieren, wobei das Verfahren umfasst:
in einem Konfigurationsmodus, Empfangen von Standortdaten, die den Standort einer elektronischen Vorrichtung (210) unabhängig von der Funkvorrichtung mit festem Standort (10) darstellen, wobei die elektronische Vorrichtung (210) eine Standortbestimmungsfähigkeit hat und sich in unmittelbarer Nähe der Funkvorrichtung mit festem Standort befindet, wenn die Standortdaten von der elektronischen Vorrichtung bestimmt werden, und wobei der Standort der elektronischen Vorrichtung (210) als ein Proxy für den Standort der Funkvorrichtung mit festem Standort fungiert;
in dem Konfigurationsmodus, durch eine Standortkonfigurationsfunktion (72) Einpflegen eines Standortkonfigurationsfeldes, das
von der Funkvorrichtung mit festem Standort (10) mit einem
Standortwert gespeichert wird, der dem Standort entspricht, der durch die Standortdaten dargestellt wird, wobei der eingepflegte Standortwert den geografischen Standort der Funkvorrichtung mit festem Standort darstellt, wobei die Standortdaten durch die elektronische Vorrichtung (210)bestimmt werden und von der Funkvorrichtung mit festem Standort innerhalb einer vorbestimmten Zeit als Teil einer Validitätsprüfung empfangen werden, um sicherzustellen, dass der Standort der elektronischen Vorrichtung in unmittelbarer Nähe des tatsächlichen Geostandorts der Funkvorrichtung mit festem Standort bestimmt wird; und
in einem aktiven Zustand, Anfordern von Bandbreitenzugang von einem Bandbreitenmanagementserver (212) zu einer Bandbreite, die verfügbar ist, um von der Funkvorrichtung mit festem Standort genutzt zu werden, drahtlose Kommunikationen an dem geografischen Standort auszuführen, der von dem Standortwert dargestellt wird.

2. Verfahren nach Anspruch 1, wobei die empfangenen Standortdaten von der elektronischen Vorrichtung über eine direkte Kommunikationsverbindung zwischen der Funkvorrichtung mit festem Standort und der elektronischen Vorrichtung empfangen werden.

3. Verfahren nach Anspruch 1, wobei die empfangenen Standortdaten von einem Remote-Server empfangen werden, wobei der Server die Standortdaten von der elektronischen Vorrichtung empfangen hat.

4. Verfahren nach Anspruch 1, wobei das Verfahren weiter Verifizieren umfasst, dass die Funkvorrichtung mit festem Standort und die elektronische Vorrichtung in der unmittelbaren Nähe zueinander sind, wenn die Standortdaten durch die elektronische Vorrichtung bestimmt werden, wobei die unmittelbare Nähe 50 Meter oder weniger ist.

5. Verfahren nach Anspruch 4, wobei das Verifizieren Bestimmen umfasst, dass die Standortdaten über eine drahtlose Kurzstreckenkommunikationsverbindung zwischen der elektronischen Vorrichtung und der Funkvorrichtung mit festem Standort oder eine verdrahtete Kommunikationsverbindung zwischen der elektronischen Vorrichtung und der Funkvorrichtung mit festem Standort empfangen werden.

6. Verfahren nach Anspruch 5, wobei die Standortdaten weiter Daten aufweisen, die die Zeit darstellen, zu der die Standortdaten bestimmt wurden, wobei das Verfahren weiter Verifizieren umfasst, dass die Standortdaten innerhalb einer vorbestimmten Zeit erzeugt wurden, bevor die Standortdaten entweder von der Funkvorrichtung mit festem Standort empfangen wurden oder von der elektronischen Vorrichtung von einem Remote-Server empfangen wurden.

7. Verfahren nach Anspruch 4, wobei das Verifizieren umfasst:
Empfangen eines Schlüssels von der elektronischen Vorrichtung; und
Verifizieren von mindestens zwei aus:
der Schlüssel hat einen gültigen Wert;
der Schlüssel ist nicht abgelaufen;
weniger als eine vorbestimmte Zeitspanne ist verstrichen, seit der Schlüssel an die elektronische Vorrichtung übertragen oder von ihr empfangen wurde; und
der Schlüssel wurde entweder an die elektronische Vorrichtung übertragen, von der elektronischen Vorrichtung gewonnen oder von der elektronischen Vorrichtung empfangen, wenn die elektronische Vorrichtung in unmittelbarer Nähe der Funkvorrichtung mit festem Standort ist.

8. Verfahren nach Anspruch 4, wobei das Verifizieren Messen von Signalstärke auf vorbestimmten Kanälen und Übertragen gemessener Signalstärkenwerte an einen Server zum Vergleich mit einem vorbestimmten Bandbreitenprofil für den Standort umfasst.

9. Verfahren nach Anspruch 1, wobei die Standortdaten weiter Daten aufweisen, die die Zeit darstellen, zu der die Standortdaten bestimmt wurden, wobei das Verfahren weiter Verifizieren umfasst, dass die Standortdaten innerhalb einer vorbestimmten Zeit erzeugt wurden, bevor die Standortdaten entweder von der Funkvorrichtung mit festem Standort empfangen wurden oder von der elektronischen Vorrichtung von einem Remote-Server empfangen wurden.

10. Verfahren nach Anspruch 1, weiter umfassend Überwachen zum Bestimmen, ob die Funkvorrichtung mit festem Standort sich auf eine Weise bewegt hat, die indiziert, dass die Funkvorrichtung mit festem Standort potenziell den tatsächlichen geografischen Standort gewechselt hat, und wenn das der Fall ist, Wiederholen der Empfangs- und Einpflegeschritte.

11. Funkvorrichtung mit festem Standort (10), umfassend:
einen Funksendeempfänger zum Aufbauen drahtloser Kommunikationen;
einen Speicher (66); und
eine Steuerschaltung (64), die den Betrieb der Funkvorrichtung mit festem Standort steuert und die Funkvorrichtung mit festem Standort veranlasst:
in einem Konfigurationsmodus, Standortdaten zu empfangen, die einen Standort einer elektronischen Vorrichtung getrennt von der Funkvorrichtung mit festem Standort darstellen, wobei der Standort der elektronischen Vorrichtung als Proxy für den Standort der Funkvorrichtung mit festem Standort fungiert, wobei die Standortdaten durch die elektronische Vorrichtung (10) bestimmt werden und von der Funkvorrichtung mit festem Standort innerhalb einer vorbestimmten Zeitspanne als Teil einer Validitätsprüfung empfangen werden, um sicherzustellen, dass der Standort der elektronischen Vorrichtung in unmittelbarer Nähe des tatsächlichen Geostandorts der Funkvorrichtung mit festem Standort bestimmt wird;
in dem Konfigurationsmodus, ein Standortkonfigurationsfeld einzupflegen, das in dem Speicher mit einem Standortwert gespeichert ist, der dem Standort entspricht, der von den Standortdaten dargestellt wird, wobei der eingepflegte Standortwert den geografischen Standort der Funkvorrichtung mit festem Standort darstellt; und
in einem aktiven Zustand, von einem Bandbreitenmanagementserver (212) Bandbreitenzugang zu einer Bandbreite zu anfordern, die verfügbar ist, um von der Funkvorrichtung mit festem Standort (10) genutzt zu werden, drahtlose Kommunikationen an dem geografischen Standort auszuführen, der von dem Standortwert dargestellt wird.

## Revendications

1. Procédé de configuration d'un dispositif radio à emplacement fixe (10) avec des informations d'emplacement, le procédé comprenant :
au cours d'un mode de configuration, la réception de données d'emplacement représentant un emplacement d'un dispositif électronique (210) séparé du dispositif radio à emplacement fixe (10), le dispositif électronique (210) ayant une capacité de détermination d'emplacement et étant situé à proximité étroite du dispositif radio à emplacement fixe lorsque les données d'emplacement sont déterminées par le dispositif électronique, et l'emplacement du dispositif électronique (210) opérant comme un serveur mandataire pour l'emplacement du dispositif radio à emplacement fixe ;
au cours du mode de configuration, le peuplement par une fonction de configuration d'emplacement (72) d'un champ de configuration d'emplacement stocké par le dispositif radio à emplacement fixe (10) avec une valeur d'emplacement concordant avec l'emplacement représenté par les données d'emplacement, la valeur d'emplacement peuplée représentant l'emplacement géographique du dispositif à emplacement fixe, dans lequel les données d'emplacement sont déterminées par le dispositif électronique (210) et reçues par le dispositif radio à emplacement fixe dans une période de temps prédéterminée en tant que partie d'un contrôle de validité pour s'assurer que l'emplacement du dispositif électronique est déterminé à proximité étroite de l'emplacement géographique réel du dispositif radio à emplacement fixe ; et
au cours d'un état actif, la demande d'accès par un serveur de gestion de spectre (212) à un spectre qui est disponible pour une utilisation par le dispositif radio à emplacement fixe pour effectuer des communications sans fil à l'emplacement géographique représenté par la valeur d'emplacement.

2. Procédé selon la revendication 1, dans lequel les données d'emplacement reçues sont reçues du dispositif électronique via une liaison de communication directe entre le dispositif radio à emplacement fixe et le dispositif électronique.

3. Procédé selon la revendication 1, dans lequel les données d'emplacement reçues sont reçues d'un serveur distant, le serveur ayant reçu les données d'emplacement du dispositif électronique.

4. Procédé selon la revendication 1, le procédé comprenant en outre la vérification que le dispositif radio à emplacement fixe et le dispositif électronique se situent à proximité étroite l'un de l'autre lorsque les données d'emplacement sont déterminées par le dispositif électronique, la proximité étroite étant de 50 mètres ou moins.

5. Procédé selon la revendication 4, la vérification comprenant la détermination du fait que les données d'emplacement sont reçues via l'une parmi une connexion de communication sans fil à faible distance entre le dispositif électronique et le dispositif radio à emplacement fixe ou une connexion de communication câblée entre le dispositif électronique et le dispositif radio à emplacement fixe.

6. Procédé selon la revendication 5, dans lequel les données d'emplacement comprennent en outre des données représentant le moment où les données d'emplacement ont été déterminées, le procédé comprenant en outre la vérification que les données d'emplacement ont été générées dans une période prédéterminée avant que les données d'emplacement ne soient l'une des données reçues par le dispositif radio à emplacement fixe ou reçues par un serveur distant du dispositif électronique.

7. Procédé selon la revendication 4, la vérification comprenant :
la réception d'une clé du dispositif électronique ; et
la vérification d'au moins deux des conditions suivantes :
la clé a une valeur valide ;
la clé n'a pas encore expiré ;
une période de temps moindre qu'une période de temps prédéterminée s'est écoulée depuis que la clé a été transférée au dispositif électronique ou obtenue de celui-ci ; et
la clé était soit transférée au dispositif électronique, soit obtenue par le dispositif électronique, soit reçue du dispositif électronique lorsque le dispositif électronique est à proximité étroite avec le dispositif radio à emplacement fixe.

8. Procédé selon la revendication 4, la vérification comprenant la mesure de l'intensité du signal sur des canaux prédéterminés et la transmission de valeurs d'intensité du signal mesurées à un serveur pour comparaison avec une empreinte spectrale prédéterminée pour l'emplacement.

9. Procédé selon la revendication 1, dans lequel les données d'emplacement comprennent en outre des données représentant le moment où les données d'emplacement ont été déterminées, le procédé comprenant par ailleurs la vérification que les données d'emplacement ont été générées dans une période de temps prédéterminée avant que les données d'emplacement ne soient reçues par le dispositif radio à emplacement fixe ou reçues par un serveur distant du dispositif électronique.

10. Procédé selon la revendication 1, comprenant en outre la surveillance pour déterminer si le dispositif radio à emplacement fixe s'est déplacé d'une manière qui indique un potentiel pour le dispositif radio à emplacement fixe d'avoir changé l'emplacement géographique réel et, le cas échéant, la répétition des étapes de réception et de peuplement.

11. Dispositif radio à emplacement fixe (10) comprenant :
un émetteur-récepteur radio pour établir des communications sans fil ;
une mémoire (66) ; et
un circuit de commande (64) qui commande le fonctionnement du dispositif radio à emplacement fixe et amène le dispositif radio à emplacement fixe à :
au cours d'un mode de configuration, recevoir des données d'emplacement représentant un emplacement d'un dispositif électronique séparé du dispositif radio à emplacement fixe, l'emplacement du dispositif électronique fonctionnant comme serveur mandataire pour l'emplacement du dispositif radio à emplacement fixe, dans lequel les données d'emplacement sont déterminées par le dispositif électronique (10) et reçues par le dispositif radio à emplacement fixe dans une période de temps prédéterminée en tant que partie d'un contrôle de validité pour s'assurer que l'emplacement du dispositif électronique est déterminé à proximité étroite de l'emplacement géographique réel du dispositif radio à emplacement fixe ;
au cours du mode de configuration, peupler un champ de configuration d'emplacement stocké dans la mémoire avec une valeur d'emplacement qui concorde avec l'emplacement représenté par les données d'emplacement, la valeur d'emplacement peuplée représentant l'emplacement géographique du dispositif radio à emplacement fixe ; et
au cours d'un état actif, demander un accès par un serveur de gestion spectrale (212) à un spectre qui est disponible pour une utilisation par le dispositif radio à emplacement fixe (10) pour effectuer des communications sans fil à l'emplacement géographique représenté par la valeur d'emplacement.
